# EUROPÄISCHE PATENTSCHRIFT

(11) **EP 3 189 554 B1**
(45) Veröffentlichungstag und Bekanntmachung des Hinweises auf die Patenterteilung: **10.10.2018**
(21) Anmeldenummer: 15753679.8
(22) Anmeldetag: 21.08.2015
(51) Int. Cl.: H01M 8/0206, H01M 8/026, H01M 8/0263

(54) **STRÖMUNGSELEMENT, BIPOLARPLATTE UND VERFAHREN ZUM HERSTELLEN EINES STRÖMUNGSELEMENTS**
FLOW ELEMENT, BIPOLAR PLATE AND METHOD FOR PRODUCING A FLOW ELEMENT
ÉLÉMENT D'ÉCOULEMENT, PLAQUE BIPOLAIRE ET PROCÉDÉ DE PRODUCTION D'UN ÉLÉMENT D'ÉCOULEMENT

(30) Priorität: 02.09.2014 DE 102014112607
(43) Veröffentlichungstag der Anmeldung: 12.07.2017
(73) Patentinhaber: ElringKlinger AG, 72581 Dettingen (DE)
(72) Erfinder: KRAFT, Juergen, 72555 Metzingen (DE); MORCOS, Manuel, 72076 Tuebingen (DE); GOETZ, Michael, 72581 Dettingen/Erms (DE)
(74) Vertreter: Hoeger, Stellrecht & Partner Patentanwälte mbB
(86) Internationale Anmeldenummer: PCT/EP2015/069214
(87) Internationale Veröffentlichungsnummer: WO 2016/034434

(56) Entgegenhaltungen:
- DE-A1-102006 044 763
- DE-A1-102006 059 857
- DE-A1-102007 036 477

## Beschreibung

Die vorliegende Erfindung betrifft ein Strömungselement, welches insbesondere als Bestandteil einer Bipolarplatte in elektrochemischen Einrichtungen Anwendung findet.

Die DE 10 2006 059 857 A1, die DE 10 2006 044 763 A1 und die DE 10 2007 036 477 A1 offenbaren verschiedene Ausführungsformen von Bipolarplatten.

Der vorliegenden Erfindung liegt die Aufgabe zugrunde, ein Strömungselement bereitzustellen, welches stabil ausgebildet ist und eine effiziente Strömungsführung ermöglicht.

Diese Aufgabe wird erfindungsgemäß durch ein Strömungselement gemäß Anspruch 1 gelöst.

Durch die erfindungsgemäßen Merkmale des Strömungselements kann dieses vorzugsweise stabil ausgebildet werden. Insbesondere kann vorzugsweise eine unerwünscht starke Materialdehnung bei der Herstellung des Blechumformprodukts vermieden werden. Zugleich kann vorzugsweise eine effiziente Strömungsführung mittels des Strömungselements realisiert werden.

Ein Bereich mit Normalniveaudifferenz, ein Bereich mit reduzierter Niveaudifferenz, ein Paralleldehnungsbereich und/oder ein Krümmungsdehnungsbereich bezeichnet vorzugsweise jeweils einen Bereich des Grundkörpers, welcher einen Kanalabschnitt eines Kanals umfasst.

Ein Bereich des Grundkörpers, welcher einen Kanalabschnitt eines Kanals umfasst, erstreckt sich vorzugsweise in einer Querrichtung, die im Wesentlichen senkrecht zu einer Strömungsrichtung eines in dem Kanal geführten Fluids ausgerichtet ist, von einer den Kanal begrenzenden Erhöhung bis zu einer weiteren den Kanal begrenzenden Erhöhung.

Eine Normalniveaudifferenz ist insbesondere eine maximale Niveaudifferenz, welche über den gesamten Grundkörper hinweg nicht überschritten wird.

Der Grundkörper ist vorzugsweise beidseitig, insbesondere bezüglich einer Höhenrichtung an einer Unterseite und an einer Oberseite des Grundkörpers, an eine ebene Fläche anlegbar. Diejenigen Oberflächenbereiche der Oberseite bzw. der Unterseite, mit welchen der Grundkörper an die ebenen Flächen anlegbar ist und unmittelbar in Kontakt kommt, liegen vorzugsweise in einer Anlageebene der Oberseite bzw. einer Anlageebene der Unterseite.

In einem Bereich mit Normalniveaudifferenz erstreckt sich mindestens eine Erhöhung des Grundkörpers vorzugsweise bis zu einer Anlageebene der Oberseite und mindestens eine Vertiefung des Grundkörpers bis zu einer Anlageebene der Unterseite des Grundkörpers.

In einem Bereich mit Normalniveaudifferenz ist somit ein längs der Höhenrichtung verlaufender Höhenunterschied zwischen einem tiefsten Punkt einer Vertiefung (Kanalgrund) und einem höchsten Punkt einer angrenzenden Erhöhung (Steg) maximal.

In einem Bereich mit reduzierter Niveaudifferenz erstreckt sich vorzugsweise mindestens eine Vertiefung nicht bis zur Anlageebene der Unterseite des Grundkörpers.

Alternativ oder ergänzend hierzu kann vorgesehen sein, dass sich in einem Bereich mit reduzierter Niveaudifferenz mindestens eine Erhöhung des Grundkörpers nicht bis zu einer Anlageebene der Oberseite des Grundkörpers erstreckt.

Ein Paralleldehnungsbereich des Grundkörpers ist vorzugsweise ein Bereich des Grundkörpers, in welchem eine aus der Umformung des Blechumformprodukts resultierende Dehnung des Grundkörpers derart vorgesehen ist, dass die Dehnungsvektoren in senkrecht zur Strömungsrichtung eines Fluids genommenen Querschnittsebenen liegen, wobei längs der Strömungsrichtung aufeinander folgende Querschnittsebenen parallel zueinander ausgerichtet sind.

Bei einer Ausgestaltung der Erfindung kann vorgesehen sein, dass mindestens ein Bereich mit reduzierter Niveaudifferenz ausschließlich einen Paralleldehnungsbereich des Grundkörpers umfasst.

Alternativ hierzu kann vorgesehen sein, dass mindestens ein Bereich mit reduzierter Niveaudifferenz sich in einen Krümmungsdehnungsbereich des Grundkörpers hineinerstreckt.

Der Bereich mit reduzierter Niveaudifferenz umfasst dann vorzugsweise einen Paralleldehnungsbereich des Grundkörpers und einen Krümmungsdehnungsbereich des Grundkörpers.

Günstig kann es sein, wenn mindestens ein Paralleldehnungsbereich ein Bereich des Grundkörpers ist, welcher einen im Wesentlichen linearen Kanalabschnitt eines Kanals umfasst oder durch einen im Wesentlichen linearen Kanalabschnitt eines Kanals gebildet ist.

Ein linearer Kanalabschnitt ist vorzugsweise ein Kanalabschnitt, in welchem ein Fluid längs eines linearen Strömungswegs geführt oder führbar ist.

Vorteilhaft kann es ferner sein, wenn mindestens ein Bereich mit reduzierter Niveaudifferenz ein Bereich des Grundkörpers ist, welcher einen im Wesentlichen linearen Kanalabschnitt eines Kanals umfasst oder durch einen im Wesentlichen linearen Kanalabschnitt eines Kanals gebildet ist.

Mindestens ein Krümmungsdehnungsbereich ist vorzugsweise ein Bereich des Grundkörpers, welcher einen gekrümmten oder gebogenen Kanalabschnitt eines Kanals umfasst oder durch einen gekrümmten oder gebogenen Kanalabschnitt eines Kanals gebildet ist.

Ein gekrümmter oder gebogener Kanalabschnitt ist vorzugsweise ein Kanalabschnitt, in welchem ein Fluid längs eines gekrümmten oder gebogenen Strömungswegs geführt oder führbar ist.

Ein gekrümmter oder gebogener Kanalabschnitt kann beispielsweise ein Strömungsumlenkungsabschnitt sein, in welchem eine einfache oder mehrfache Strömungsumlenkung eines in dem Kanal geführten Fluids erfolgt, beispielsweise eine einfache oder mehrfache Strömungsumlenkung um mindestens ungefähr 60°, beispielsweise mindestens ungefähr 80°, insbesondere ungefähr 90° oder ungefähr 180°.

Ferner kann vorgesehen sein, dass mindestens ein Krümmungsdehnungsbereich ein Bereich des Grundkörpers ist, welcher ein Kanalende und/oder ein Stegende eines Kanals umfasst oder durch ein Kanalende und/oder ein Stegende eines Kanals gebildet ist.

Ein Kanalende ist insbesondere ein Abschnitt eines Kanals, in welchem eine den Kanal bildende Vertiefung und/oder zwei den Kanal begrenzende Erhöhungen enden oder auslaufen.

Es kann vorgesehen sein, dass mindestens ein Bereich mit Normalniveaudifferenz einen gekrümmten oder gebogenen Kanalabschnitt eines Kanals umfasst oder durch einen gekrümmten oder gebogenen Kanalabschnitt eines Kanals gebildet ist.

Insbesondere kann vorgesehen sein, dass mindestens ein Bereich mit reduzierter Niveaudifferenz teilweise durch einen im Wesentlichen linearen Kanalabschnitt eines Kanals und teilweise durch einen gekrümmten oder gebogenen Kanalabschnitt desselben Kanals, welcher auf den im Wesentlichen linearen Kanalabschnitt folgt, gebildet ist. Dieser Bereich mit reduzierter Niveaudifferenz grenzt vorzugsweise längs der Strömungsrichtung des Fluids an einen Bereich mit Normalniveaudifferenz an, welcher insbesondere einen gekrümmten oder gebogenen Kanalabschnitt eines Kanals und/oder einen im Wesentlichen linearen Kanalabschnitt eines Kanals umfasst oder durch einen gekrümmten oder gebogenen Kanalabschnitt eines Kanals und/oder einen im Wesentlichen linearen Kanalabschnitt eines Kanals gebildet ist.

Vorteilhaft kann es sein, wenn in mindestens einem Bereich mit Normalniveaudifferenz ein durch die Vertiefung gebildeter Kanalgrund einerseits und ein durch die angrenzende Erhöhung gebildeter Steg andererseits im Wesentlichen parallel zueinander verlaufen.

Ferner kann vorgesehen sein, dass in mindestens einem Bereich mit Normalniveaudifferenz ein durch die Vertiefung gebildeter Kanalgrund einerseits und ein durch die angrenzende Erhöhung gebildeter Steg andererseits windschief zueinander verlaufen.

In mindestens einem Bereich mit reduzierter Niveaudifferenz verlaufen vorzugsweise ein durch die Vertiefung gebildeter Kanalgrund einerseits und ein durch die angrenzende Erhöhung gebildeter Steg andererseits im Wesentlichen parallel zueinander.

Das erfindungsgemäße Strömungselement eignet sich insbesondere zur Verwendung als eine Bipolarplatte oder zur Verwendung in einer Bipolarplatte.

Die vorliegende Erfindung betrifft daher auch eine Bipolarplatte, insbesondere für eine elektrochemische Vorrichtung, welche ein oder mehrere erfindungsgemäße Strömungselemente umfasst.

Die erfindungsgemäße Bipolarplatte weist vorzugsweise einzelne oder mehrere der im Zusammenhang mit dem erfindungsgemäßen Strömungselement beschriebenen Merkmale und/oder Vorteile auf.

Vorteilhaft kann es sein, wenn die Bipolarplatte ein erstes Strömungselement und mindestens ein weiteres Strömungselement umfasst, wobei das erste Strömungselement und/oder das mindestens eine weitere Strömungselement erfindungsgemäße Strömungselemente sind.

Das erste Strömungselement ist vorzugsweise derart an dem weiteren Strömungselement angeordnet, dass die Vertiefungen in dem Grundkörper sich in Richtung des weiteren Strömungselements erstrecken.

Alternativ hierzu kann vorgesehen sein, dass das erste Strömungselement derart an dem weiteren Strömungselement angeordnet ist, dass die Vertiefungen in dem Grundkörper sich von dem weiteren Strömungselement wegerstrecken.

Die Vertiefungen in dem Grundkörper liegen vorzugsweise zumindest abschnittsweise im Bereich eines Kanalgrunds der Vertiefungen an dem weiteren Strömungselement an.

Mindestens ein Bereich mit reduzierter Niveaudifferenz des Grundkörpers des ersten Strömungselements ist vorzugsweise beabstandet von dem weiteren Strömungselement angeordnet.

Insbesondere kann vorgesehen sein, dass zwischen dem ersten Strömungselement und dem mindestens einen weiteren Strömungselement in einem Bereich mit reduzierter Niveaudifferenz des Grundkörpers des ersten Strömungselements ein Spalt gebildet ist.

Der Spalt bildet insbesondere einen Überströmungsbereich oder eine Strömungspforte, welcher bzw. welche eine Fluidströmung in diesem Bereich zwischen dem ersten Strömungselement und dem mindestens einen weiteren Strömungselement ermöglicht.

Günstig kann es sein, wenn zumindest ein Abschnitt eines Paralleldehnungsbereichs des Grundkörpers des ersten Strömungselements beabstandet von dem weiteren Strömungselement angeordnet ist.

Alternativ oder ergänzend hierzu kann vorgesehen sein, dass zumindest ein Abschnitt eines Krümmungsdehnungsbereichs des Grundkörpers des ersten Strömungselements beabstandet von dem weiteren Strömungselement angeordnet ist.

Es kann vorgesehen sein, dass das erste Strömungselement in einer Anlageebene einer Unterseite des ersten Strömungselements an dem weiteren Strömungselement anliegt.

Das erste Strömungselement und das weitere Strömungselement können beispielsweise spiegelsymmetrisch bezüglich der Anlageebene der Unterseite des ersten Strömungselements ausgebildet sein.

Es kann jedoch auch eine nichtspiegelsymmetrische Ausgestaltung des ersten Strömungselements und des weiteren Strömungselements vorgesehen sein.

Die vorliegende Erfindung betrifft ferner ein Verfahren zum Herstellen eines Strömungselements, insbesondere eines Strömungselements für eine Bipolarplatte einer elektrochemischen Vorrichtung.

Der vorliegenden Erfindung liegt diesbezüglich die Aufgabe zugrunde, ein Verfahren bereitzustellen, mittels welchem ein Strömungselement herstellbar ist, das stabil ausgebildet ist und eine effiziente Strömungsführung ermöglicht.

Diese Aufgabe wird erfindungsgemäß durch ein Verfahren zum Herstellen eines Strömungselements, insbesondere eines erfindungsgemäßen Strömungselements, gelöst, wobei das Verfahren Folgendes umfasst:
Bereitstellen eines Grundkörpers;
Umformen des Grundkörpers zur Ausbildung einer Kanalstruktur, wobei die Kanalstruktur mehrere Kanäle umfasst, welche durch Vertiefungen in dem Grundkörper gebildet und durch Erhöhungen des Grundkörpers voneinander getrennt sind,
wobei mindestens ein Bereich mit Normalniveaudifferenz gebildet wird, welche bezüglich einer senkrecht zu zwei Haupterstreckungsrichtungen des Grundkörpers verlaufenden Höhenrichtung einen Höhenunterschied zwischen einer Vertiefung und einer angrenzenden Erhöhung bezeichnet,
wobei mindestens ein Bereich mit reduzierter Niveaudifferenz gebildet wird, in welchem ein Höhenunterschied zwischen einer Vertiefung und einer angrenzenden Erhöhung geringer ist als die Normalniveaudifferenz,
wobei der mindestens eine Bereich mit reduzierter Niveaudifferenz einen Paralleldehnungsbereich des Grundkörpers umfasst, welcher bei der Umformung des Grundkörpers längs Dehnungsvektoren gedehnt wird, die in parallel zueinander verlaufenden Ebenen liegen,
wobei der mindestens eine Bereich mit reduzierter Niveaudifferenz, welcher den Paralleldehnungsbereich des Grundkörpers umfasst, an einen Krümmungsdehnungsbereich des Grundkörpers angrenzt, welcher bei der Umformung des Grundkörpers längs Dehnungsvektoren gedehnt wird, die in sich schneidenden Ebenen liegen.

Das erfindungsgemäße Verfahren weist vorzugsweise einzelne oder mehrere der im Zusammenhang mit dem erfindungsgemäßen Strömungselement und/oder der erfindungsgemäßen Bipolarplatte beschriebenen Merkmale und/oder Vorteile auf.

Der Grundkörper weist vorzugsweise eine Kanalstruktur auf, welche zwei oder mehr Kanalzüge umfasst, die jeweils eine Eintrittsseite der Kanalstruktur mit einer Austrittsseite der Kanalstruktur verbinden.

Ein Kanalzug umfasst vorzugsweise ein oder mehrere Mäanderabschnitte, in welchem ein Fluid mäanderförmig geführt oder führbar ist.

Der Grundkörper des Strömungselements weist vorzugsweise zumindest näherungsweise eine im Wesentlichen konstante Materialstärke auf, insbesondere vor und/oder nach der Herstellung des Strömungselements.

Insbesondere kann vorgesehen sein, dass die Materialstärke des Grundkörpers über seine gesamte Ausdehnung hinweg im Wesentlichen ausschließlich aufgrund einer aus der Herstellung der Vertiefungen und Erhöhungen resultierenden Dehnung des Grundkörpers variiert.

Ein Ausgangsmaterial zur Herstellung des Strömungselements und somit ein Ausgangsmaterial des Grundkörpers ist vorzugsweise ein plattenförmiges Blech.

Ferner weisen das erfindungsgemäße Strömungselement, die erfindungsgemäße Bipolarplatte und/oder das erfindungsgemäße Verfahren vorzugsweise einzelne oder mehrere der nachfolgend beschriebenen Merkmale und/oder Vorteile auf:
Durch die erfindungsgemäße Ausgestaltung des Strömungselements kann vorzugsweise ein unerwünschtes Reißen des Grundkörpers bei der Herstellung der Kanalstruktur vermieden werden.

Insbesondere durch einen oder mehrere Bereiche mit reduzierter Niveaudifferenz kann vorzugsweise lokal ein geringerer Umformungsgrad des Grundkörpers bei der Herstellung der Kanalstruktur ermöglicht werden.

Zum Ausgleich eines beispielsweise angehobenen Kanalgrunds kann beispielsweise eine Verbreiterung und/oder Abflachung einer oder beider Flanken eines Kanals (Bereich zwischen dem Kanalgrund und den angrenzenden Erhöhungen) vorgesehen sein, insbesondere um einen Strömungsquerschnitt längs der Strömungsrichtung möglichst konstant zu halten.

Die Kanalstruktur des Strömungselements bildet insbesondere ein so genanntes Flowfield.

Vorzugsweise ist durch die Erhöhungen und Vertiefungen des Grundkörpers eine Vielzahl von Abstützstellen oder Abstützbereichen zwischen der Oberseite des Grundkörpers und der Unterseite des Grundkörpers gebildet.

Es kann vorgesehen sein, dass die Bipolarplatte insgesamt drei Strömungsführungen für drei unterschiedliche Fluide umfasst.

Die Bipolarplatte kann beispielsweise zwei Strömungselemente umfassen, wobei zwischen den beiden Strömungselementen ein erstes Fluid und an einander gegenüberliegenden Außenseiten der Strömungselemente jeweils ein weiteres Fluid führbar oder geführt ist.

Eine Kanalbreite eines Kanals der Kanalstruktur des Grundkörpers beträgt vorzugsweise höchstens ungefähr 3 mm, beispielsweise höchstens ungefähr 1,5 mm, insbesondere ungefähr 1 mm. Unter einer Kanalbreite ist dabei insbesondere ein Abstand zwischen zwei Stegen des Kanals zu verstehen.

Eine Kanaltiefe eines Kanals beträgt vorzugsweise mindestens ungefähr 0,3 mm, insbesondere mindestens ungefähr 0,4 mm, beispielsweise ungefähr 0,5 mm. Insbesondere ist eine solche Kanaltiefe vorzugsweise in einem Bereich mit Normalniveaudifferenz vorgesehen.

In einem Bereich mit reduzierter Niveaudifferenz liegt die Kanaltiefe vorzugsweise bei höchstens ungefähr 90 %, beispielsweise bei höchstens ungefähr 80 %, der Kanaltiefe in einem Bereich mit Normalniveaudifferenz.

Der Grundkörper ist vorzugsweise in einem Prägeprozess durch Umformen eines dünnen Blechs, insbesondere eines metallischen Blechs, gebildet.

Eine Materialstärke des Grundkörpers beträgt vorzugsweise weniger als 0,3 mm, insbesondere weniger als 0,15 mm, beispielsweise höchstens ungefähr 0,1 mm.

Ferner kann vorgesehen sein, dass eine Materialstärke des Grundkörpers ungefähr 0,05 mm beträgt.

Der Grundkörper kann beispielsweise aus einem metallischen Material, insbesondere aus einem Edelstahl mit der Bezeichnung 1.4404 oder 1.4306, gebildet sein.

Es kann vorgesehen sein, dass zwischen zwei Bereichen mit reduzierter Niveaudifferenz ein Bereich mit Normalniveaudifferenz vorgesehen ist. Der Bereich mit Normalniveaudifferenz kann dann insbesondere der stabilen Abstützung des Strömungselements an dessen Oberseite und an dessen Unterseite dienen.

Weitere bevorzugte Merkmale und/oder Vorteile der Erfindung sind Gegenstand der nachfolgenden Beschreibung und der zeichnerischen Darstellung eines Ausführungsbeispiels.

In den Zeichnungen zeigen:
- Fig. 1: eine schematische perspektivische Darstellung eines Strömungselements einer Bipolarplatte;
- Fig. 2: eine vergrößerte Darstellung des Bereichs II in Fig. 1.;
- Fig. 3: eine schematische Draufsicht auf eine Oberseite des Strömungselements aus Fig. 1;
- Fig. 4: eine schematische Schnittdarstellung durch das Strömungselement aus Fig. 1 längs der Linie A-A in Fig. 3;
- Fig. 5: eine schematische Schnittdarstellung des Strömungselements aus Fig. 1 längs der Linie B-B in Fig. 3;
- Fig. 6: eine schematische Schnittdarstellung des Strömungselements aus Fig. 1 längs der Linie C-C in Fig. 3;
- Fig. 7: eine vergrößerte Darstellung des Bereichs VII in Fig. 3;
- Fig. 8: eine vergrößerte perspektivische Darstellung des Strömungselements mit Blickrichtung in Richtung des Pfeiles 8 in Fig. 3;
- Fig. 9: eine vergrößerte perspektivische Schnittdarstellung des Strömungselements aus Fig. 1;
- Fig. 10: eine schematische perspektivische Darstellung einer Bipolarplatte, welche ein Strömungselement gemäß Fig. 1 umfasst; und
- Fig. 11: eine vergrößerte Darstellung des Bereichs XI in Fig. 10.

Gleiche oder funktional äquivalente Elemente sind in sämtlichen Figuren mit denselben Bezugszeichen versehen.

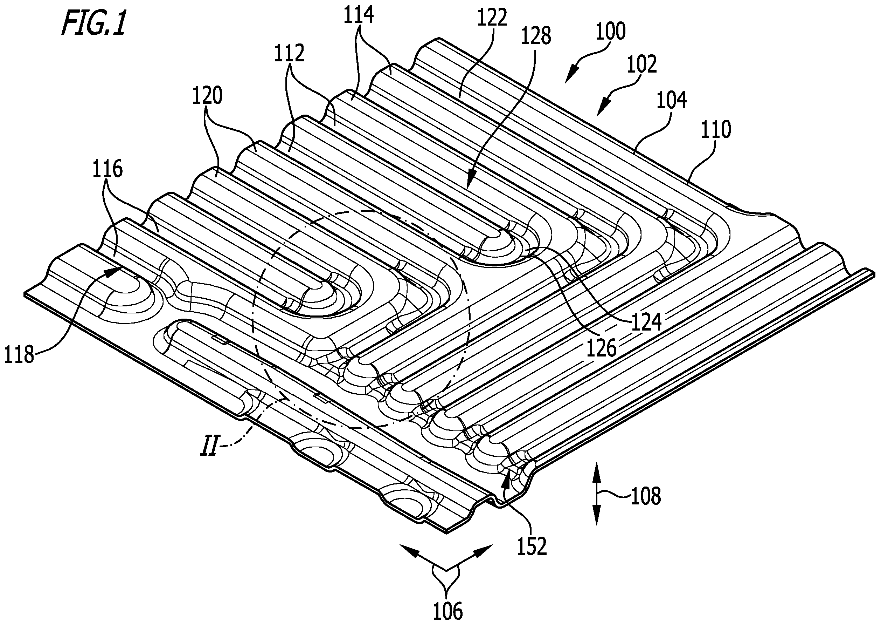

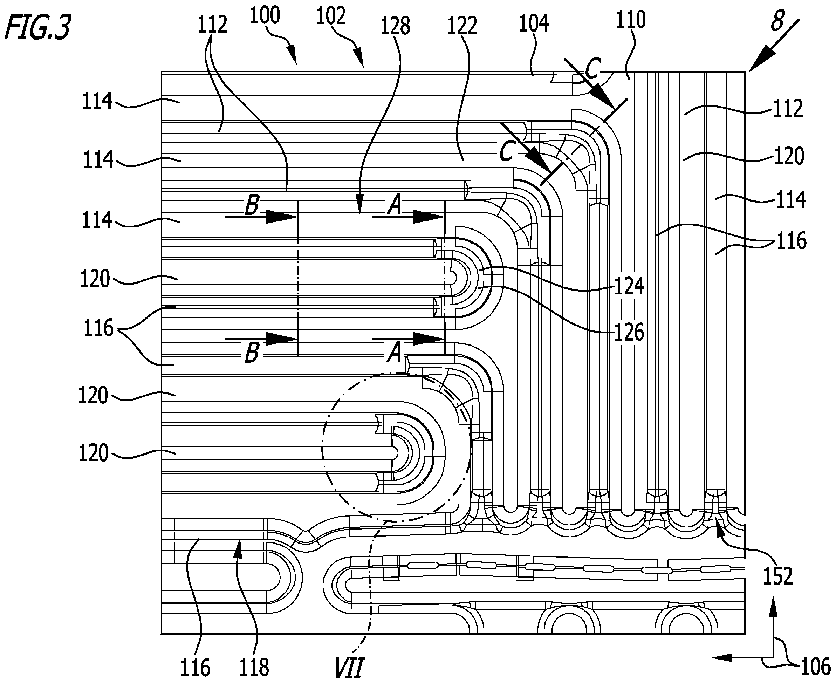

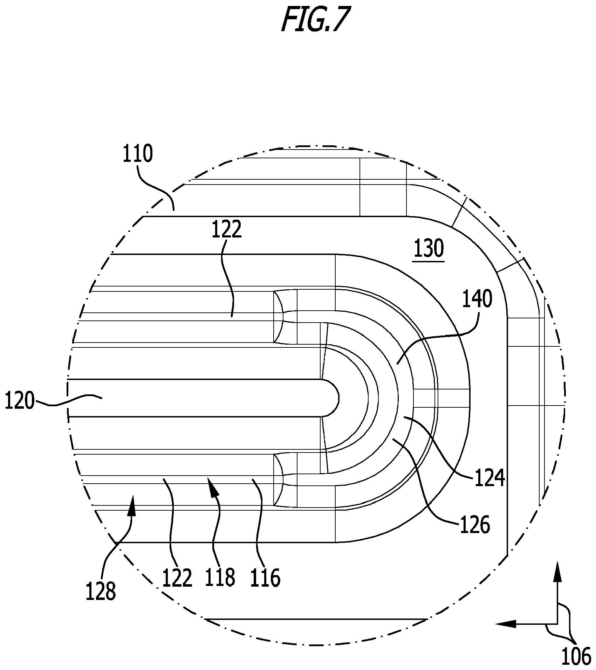

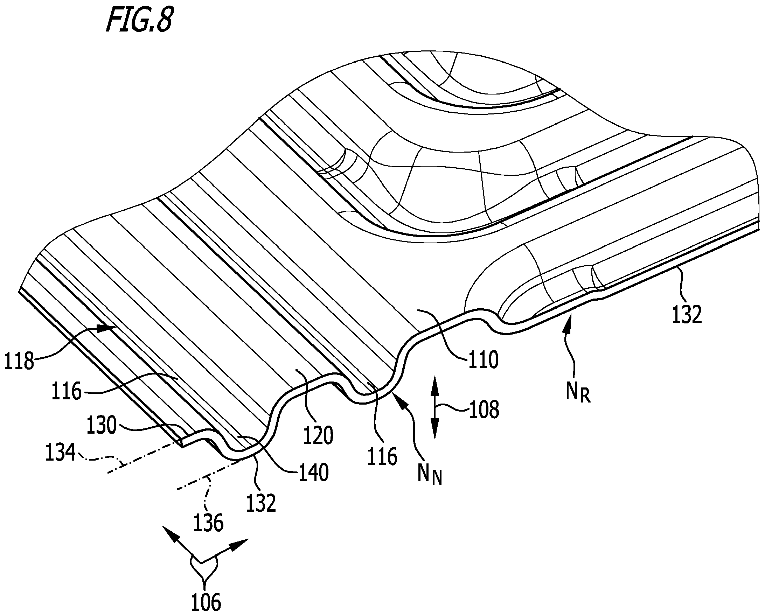

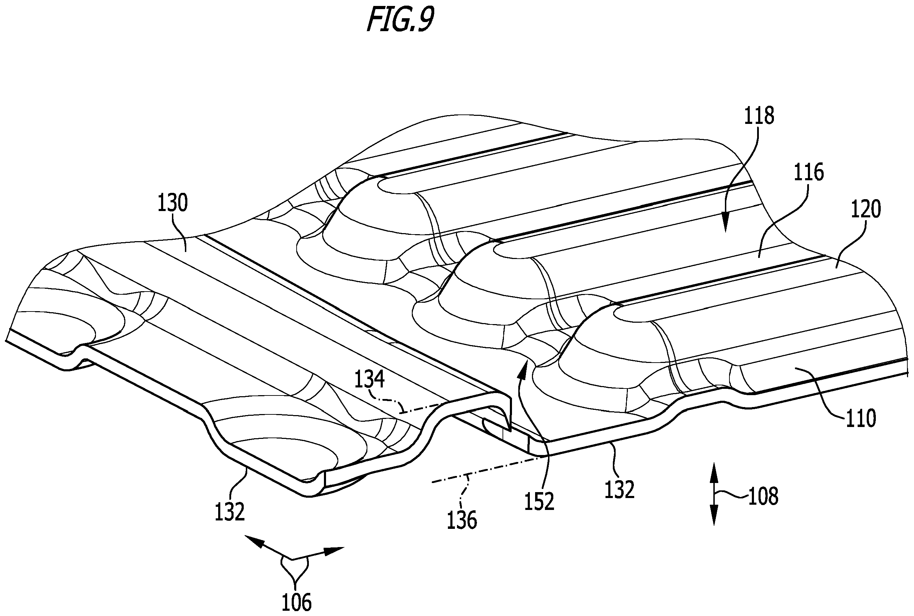

Eine in den Fig. 1 bis 11 dargestellte Ausführungsform einer als Ganzes mit 100 bezeichneten Bipolarplatte findet insbesondere in elektrochemischen Einrichtungen, beispielsweise Brennstoffzellenvorrichtungen, Anwendung. Die Bipolarplatte 100 dient dabei insbesondere der elektrischen Kontaktierung benachbarter elektrochemischer Einheiten (Zellen) sowie der Fluidzuführung, Fluidabführung und Kühlung.

Die Bipolarplatte 100 umfasst ein oder mehrere Strömungselemente 102.

Bei der in den Fig. 1 bis 11 dargestellten Ausführungsform einer Bipolarplatte 100 sind zwei Strömungselemente 102 vorgesehen.

Eines dieser Strömungselemente 102 ist in den Fig. 1 bis 9 separat dargestellt und nachfolgend näher beschrieben.

Das Strömungselement 102 umfasst einen Grundkörper 104, welcher im Wesentlichen plattenförmig ausgebildet ist und sich in zwei Haupterstreckungsrichtungen 106 erstreckt.

Die Haupterstreckungsrichtungen 106 sind insbesondere senkrecht zueinander und senkrecht zu einer Höhenrichtung 108 des Grundkörpers 104 ausgerichtet.

Der Grundkörper 104 ist insbesondere ein Blechumformprodukt 110 und als solches beispielsweise aus einem metallischen Blech durch Prägen hergestellt.

Der Grundkörper 104 umfasst insbesondere mehrere Vertiefungen 112 und mehrere Erhöhungen 114.

Die Vertiefungen 112 in dem Grundkörper 104 bilden Kanäle 116 einer Kanalstruktur 118 des Strömungselements 102.

Die Erhöhungen 114 des Grundkörpers 104 bilden Stege 120 des Grundkörpers 104, zwischen welchen die Kanäle 116 verlaufen.

Die Kanäle 116 sind teilweise linear ausgebildet.

Insbesondere umfassen die Kanäle 116 jeweils einen oder mehrere lineare Kanalabschnitte 122.

Ferner umfassen die Kanäle 116 gekrümmte oder gebogene Kanalabschnitte 124, mittels welchen insbesondere Strömungsumlenkabschnitte 126 der Kanäle 116 gebildet sind.

Die Kanäle 116 des Strömungselements 102 dienen insbesondere der Führung eines Fluids, beispielsweise eines Gases oder einer Flüssigkeit, von einer Eintrittsseite des Strömungselements 102 bis zu einer Austrittsseite des Strömungselements 102.

Die Kanäle 116 umfassen beispielsweise einen oder mehrere Mäanderabschnitte 128, mittels welchen eine gleichmäßige Verteilung des geführten Fluids und/oder eine Verlängerung eines Strömungswegs realisierbar ist.

In einem montierten Zustand des Strömungselements 102 liegt das Strömungselement 102 vorzugsweise beidseitig flächig an einem weiteren Element an.

Das Strömungselement 102 grenzt dabei insbesondere mit einer Oberseite 130 an ein erstes benachbartes Element und mit einer Unterseite 132 an ein zweites benachbartes Element.

Die Erhöhungen 114 und somit die Stege 120 des Grundkörpers 104 erstrecken sich bis in eine gemeinsame Anlageebene 134 der Oberseite 130, in welcher vorzugsweise sämtliche Bereiche des Strömungselements 102 angeordnet sind, die in Kontakt mit dem an der Oberseite 130 anliegenden weiteren Element gelangen.

Die Vertiefungen 112 des Grundkörpers 104 erstrecken sich vorzugsweise zumindest abschnittsweise bis in eine Anlageebene 136 der Unterseite 132 des Grundkörpers 104.

In der Anlageebene 136 der Unterseite 132 des Grundkörpers 104 liegen vorzugsweise diejenigen Bereiche des Grundkörpers 104, welche im montierten Zustand des Strömungselements 102 mit dem weiteren Element in Kontakt kommen.

Ein Abstand zwischen der Anlageebene 134 und der parallel hierzu verlaufenden Anlageebene 136 ergibt eine Höhe H des Strömungselements 102.

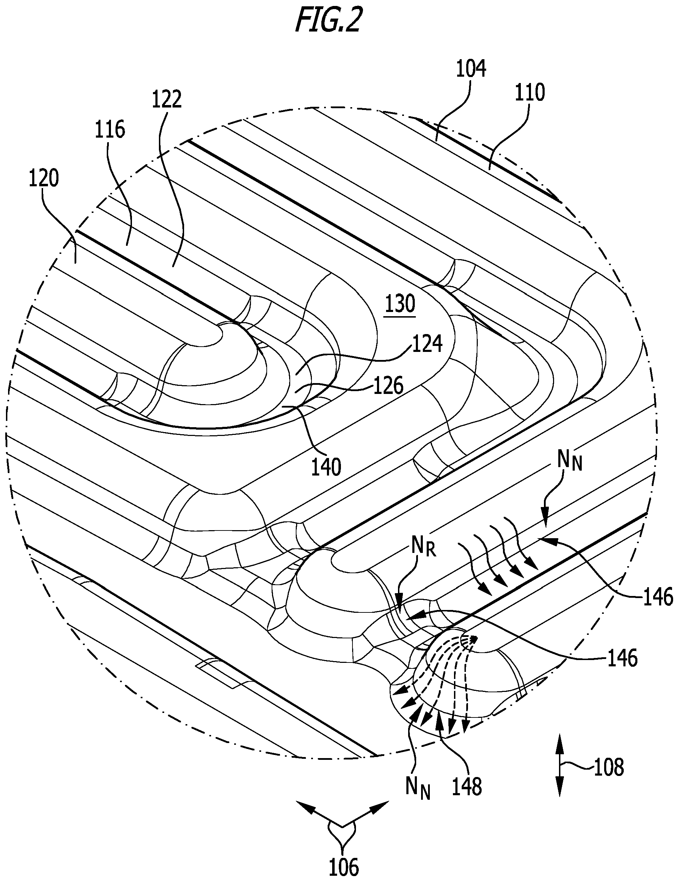

Unter Berücksichtigung der Tatsache, dass der Grundkörper 104 als ein Blechumformprodukt 110 ausgebildet ist, ergibt sich insbesondere aus den Fig. 2, 8 und 9, dass der Grundkörper 104 zur Herstellung der Kanalstruktur 118 an unterschiedlichen Stellen unterschiedlich stark verformt werden muss, um die gewünschte Kanalstruktur 118 zu erhalten.

Insbesondere ein Bereich von Flanken 138, welche einen Übergangsbereich zwischen den Vertiefungen 112 und den Erhöhungen 114 bilden, wird hierbei stark gedehnt.

Zur Vermeidung einer zu starken Dehnung, welche zu einem Reißen des Grundkörpers 104 führen kann, umfasst der Grundkörper 104 Bereiche mit unterschiedlichen Niveaudifferenzen.

Unter einer Niveaudifferenz ist dabei ein Höhenunterschied zwischen einer Vertiefung 112 und einer angrenzenden Erhöhung 114 zu verstehen.

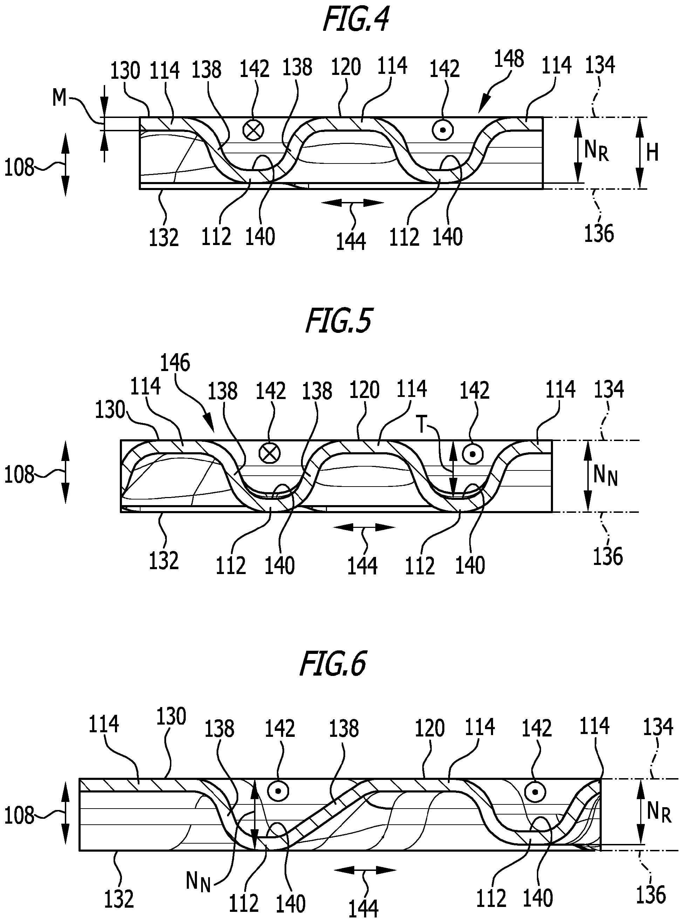

Bei dem in den Fig. 1 bis 11 dargestellten Strömungselement 102 ist einerseits eine Normalniveaudifferenz N_{N} vorgesehen (siehe Fig. 5).

In einem Bereich mit Normalniveaudifferenz N_{N} erstreckt sich eine Vertiefung 112 bis zur Anlageebene 136 der Unterseite 132. Beide angrenzenden Erhöhungen 114 erstrecken sich bis zur Anlageebene 134 der Oberseite 130.

In einem Bereich mit Normalniveaudifferenz N_{N} ist somit eine maximale Kanaltiefe T vorgesehen. Ein tiefster Punkt des Kanals 116, nachfolgend als Kanalgrund 140 bezeichnet, ist somit im Bereich mit Normalniveaudifferenz N_{N} so weit wie möglich von der Anlageebene 134 der Oberseite 130 entfernt. Auch ein Höhenunterschied zwischen dem Kanalgrund 140 und dem Steg 120, welcher schließlich in der Anlageebene 134 der Oberseite 130 liegt, ist somit maximal.

Ein Abstand zwischen dem Kanalgrund 140 und der Anlageebene 136 der Unterseite 132 ergibt sich im Bereich der Normalniveaudifferenz N_{N} durch eine Materialstärke M des Grundkörpers 104 im Bereich dieses Kanalgrunds 140.

In den Fig. 4 bis 6 sind Schnittdarstellungen durch Kanäle 116 des Grundkörpers 104 dargestellt.

Die Schnittdarstellungen sind dabei insbesondere im Wesentlichen senkrecht zu einer Strömungsrichtung 142 genommene Querschnitte.

Die Strömungsrichtung 142 ist diejenige Richtung, in welcher die Kanäle 116 mit einem Fluid durchströmbar sind.

Eine Querrichtung 144 ist senkrecht zu der Strömungsrichtung 142 ausgerichtet und verläuft in einer durch die Haupterstreckungsrichtungen 106 aufgespannten Ebene.

Die Querrichtung 144 ist somit insbesondere senkrecht zur Höhenrichtung 108 ausgerichtet.

Bei einer Umformung des Grundkörpers 104 im Bereich eines linearen Kanalabschnitts 122 ergibt sich insbesondere ein Paralleldehnungsbereich 146 des Grundkörpers 104.

In einem solchen Paralleldehnungsbereich 146 wird das Material des Grundkörpers 104 zur Ausbildung der Kanäle 116 derart gedehnt, dass Dehnungsvektoren (in Fig. 2 durch Pfeile angedeutet) in parallel zueinander verlaufenden Ebenen liegen.

Die Dehnungsvektoren liegen dabei insbesondere in Ebenen, welche senkrecht zur Strömungsrichtung 142 und parallel zueinander ausgerichtet sind.

Von einem solchen Paralleldehnungsbereich 146 zu unterscheiden ist insbesondere ein nachfolgend als Krümmungsdehnungsbereich 148 bezeichneter Bereich des Grundkörpers 104.

Ein Krümmungsdehnungsbereich 148 des Grundkörpers 104 ist ein Bereich, welcher bei der Umformung des Grundkörpers 104 zur Herstellung der Kanalstruktur 118 derart gedehnt wird, dass die Dehnungsvektoren in sich schneidenden Ebenen liegen (siehe Fig. 2).

In einem Paralleldehnungsbereich 146 wird das Material des Grundkörpers 104 im Wesentlichen gleichmäßig in einer Richtung gedehnt.

In einem Krümmungsdehnungsbereich 148 ergibt sich hingegen insbesondere eine Dehnung des Materials des Grundkörpers 104 in mehreren Richtungen.

In einem Krümmungsdehnungsbereich 148 besteht somit die Gefahr einer unerwünschten Materialstärkenreduktion, woraus ein Reißen des Grundkörpers 104 resultieren kann.

Durch eine Anhebung des Kanalgrunds 140 in bestimmten Bereichen des Grundkörpers 104 kann dieser Gefahr entgegenwirkt werden.

Eine solche Kanalgrundanhebung wird dabei insbesondere dadurch realisiert, dass die Vertiefungen 112 abschnittsweise weniger tief ausgebildet werden und sich somit nicht über den gesamten Strömungsweg innerhalb eines Kanals 116 hinweg bis zur Anlageebene 136 der Unterseite 132 des Grundkörpers 104 erstrecken.

Bereiche, in welchen die Vertiefungen 112 von der Anlageebene 136 der Unterseite 132 beabstandet sind, werden nachfolgend als Bereiche mit reduzierter Niveaudifferenz N_{R} bezeichnet (siehe insbesondere die Fig. 4 und 6).

Grundsätzlich kann vorgesehen sein, dass die Bereiche mit reduzierter Niveaudifferenz N_{R} und die Krümmungsdehnungsbereiche 148 deckungsgleich sind, da ja gerade die Krümmungsdehnungsbereiche 148 einer größeren Gefahr des Reißens des Materials ausgesetzt sind.

Es hat sich jedoch überraschenderweise gezeigt, dass die Gefahr des unerwünschten Reißens des Grundkörpers 104 in einem Krümmungsdehnungsbereich 148 auch dann drastisch reduziert werden kann, wenn ein an dem Krümmungsdehnungsbereich 148 angrenzender Paralleldehnungsbereich 146 einen angehobenen Kanalgrund 140 aufweist, das heißt ein Bereich mit reduzierter Niveaudifferenz N_{R} ist. Der eigentlich gefährdete Krümmungsdehnungsbereich 148 kann dann selbst ein Bereich mit Normalniveaudifferenz N_{N} sein (siehe insbesondere Fig. 2).

Wie insbesondere Fig. 6 zu entnehmen ist, kann der sich aus der Kanalgrundanhebung ergebende reduzierte Kanalquerschnitt durch Abschrägung einer Flanke 138 kompensiert werden.

Auch durch die Ausbildung einer solchen abgeschrägten Flanke 138 kann die Gefahr einer Rissbildung vorzugsweise reduziert werden.

Das in den Fig. 1 bis 9 dargestellte Strömungselement 102 ist beispielsweise mit seiner Unterseite 132 an ein weiteres Strömungselement 102 anlegbar.

Die beiden Strömungselemente 102 können dabei unterschiedlich geformte Kanalstrukturen 118 aufweisen.

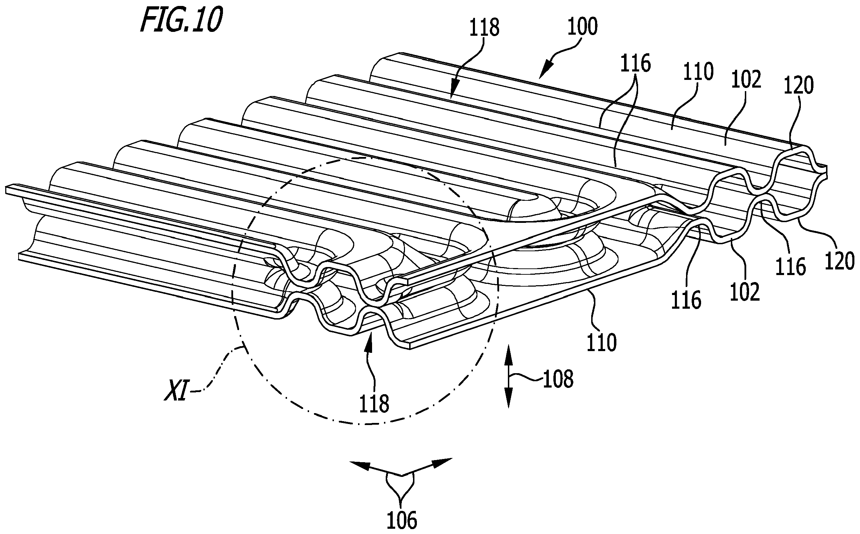

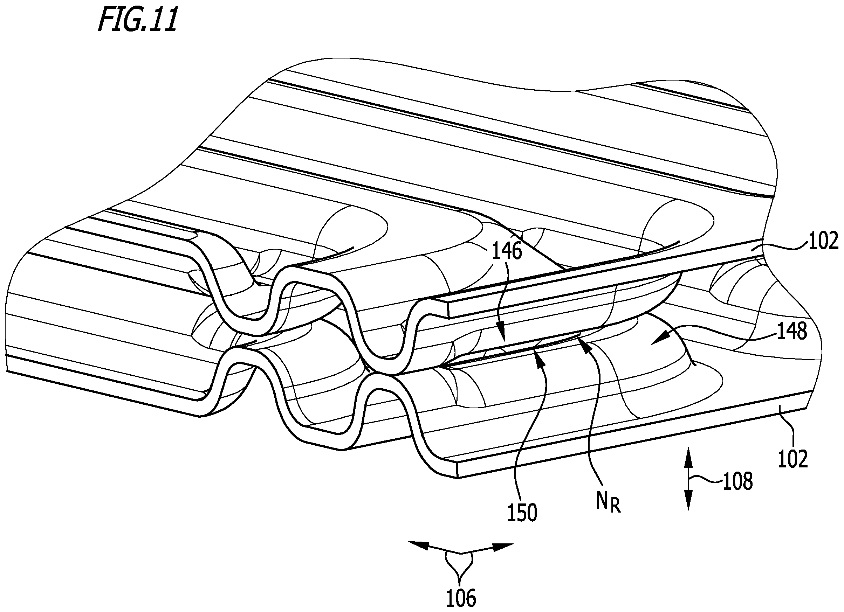

Bei der in den Fig. 10 und 11 dargestellten Ausführungsform einer Bipolarplatte 100 ist vorgesehen, dass die Strömungselemente 102 bezüglich einer Anlageebene 136 einer Unterseite 132 des in den Fig. 1 bis 9 dargestellten Strömungselements 102 spiegelsymmetrisch zueinander ausgebildet sind.

Aufgrund dieser spiegelsymmetrischen Ausgestaltung der Strömungselemente 102 wird nachfolgend auf die Unterseite 132 eines jeden Strömungselements 102 derart Bezug genommen, dass dies diejenige Seite des Strömungselements 102 ist, welche dem jeweils anderen Strömungselement 102 zugewandt angeordnet ist.

Die Strömungselemente 102 liegen somit mit ihrer jeweiligen Unterseite 132 aneinander an.

Die Anlageebene 136 ist somit eine gemeinsame Anlageebene 136, in welcher die Strömungselemente 102 in direktem Kontakt miteinander sind.

Die Strömungselemente 102 berühren sich folglich in genau denjenigen Bereichen, in welchen der jeweilige Grundkörper 104 sich bis zur Anlageebene 136 erstreckt.

Insbesondere liegen die Strömungselemente 102 somit mittels ihrer Vertiefungen 112 in den Bereichen mit Normalniveaudifferenz N_{N} aneinander an.

In den Bereichen mit reduzierter Niveaudifferenz N_{R} sind die Strömungselemente 102 hingegen beabstandet voneinander angeordnet, so dass ein Spalt 150 zwischen den Strömungselementen 102 gebildet ist.

Durch diesen Spalt 150 kann zwischen den Strömungselementen 102 geführtes Fluid hindurchtreten.

Der Spalt 150 ist somit insbesondere ein Überströmungsbereich oder eine Strömungspforte, welcher bzw. welche einen Übertritt von Fluid zwischen eigentlich voneinander getrennten Kanälen 116 ermöglicht.

Die vorstehend beschriebene Bipolarplatte 100 wird wie folgt hergestellt:
Zunächst wird zur Herstellung eines Strömungselements 102 ein metallisches Blech bereitgestellt.

Dieses metallische Blech, welches den Grundkörper 104 bildet, wird durch Umformen, insbesondere Prägen, bearbeitet.

Durch den Umformvorgang werden insbesondere die Vertiefungen 112 und Erhöhungen 114 des Grundkörpers 104 gebildet, um letztlich die Kanalstruktur 118 herzustellen.

Durch die gezielte Ausbildung von Bereichen von Normalniveaudifferenz N_{N} und Bereichen mit reduzierter Niveaudifferenz N_{R} kann eine unerwünscht starke Materialdehnung in Krümmungsdehnungsbereichen 148 des Grundkörpers 104 vermieden werden. Das Strömungselement 102 erhält somit eine hohe Stabilität und ermöglicht dennoch eine effiziente Strömungsführung.

Wie insbesondere den Fig. 1 bis 9 zu entnehmen ist, können Krümmungsdehnungsbereiche 148 beispielsweise an Kanalenden 152 und/oder an gekrümmten oder gebogenen Kanalabschnitten 124 vorgesehen sein.

Die Paralleldehnungsbereiche 146, welche insbesondere Bereiche mit reduzierter Niveaudifferenz N_{R} umfassen, sind insbesondere Bereiche von linearen Kanalabschnitten 122 der Kanäle 116.

Das weitere Strömungselement 102 wird in entsprechender Weise aus einem metallischen Blech hergestellt.

Zuletzt werden die beiden Strömungselemente 102 miteinander verbunden, beispielsweise miteinander verschweißt, um die Bipolarplatte 100 fertigzustellen.

## Patentansprüche

1. Strömungselement (102), umfassend einen plattenförmigen Grundkörper (104), welcher als ein Blechumformprodukt (110) ausgebildet ist und eine Kanalstruktur (118) aufweist,
wobei die Kanalstruktur (118) mehrere Kanäle (116) umfasst, welche durch Vertiefungen (112) in dem Grundkörper (104) gebildet und durch Erhöhungen (114) des Grundkörpers (104) voneinander getrennt sind,
wobei mindestens ein Bereich mit Normalniveaudifferenz (N_{N}) vorgesehen ist, welche bezüglich einer senkrecht zu zwei Haupterstreckungsrichtungen (106) des Grundkörpers (104) verlaufenden Höhenrichtung (108) einen Höhenunterschied zwischen einer Vertiefung (112) und einer angrenzenden Erhöhung (114) bezeichnet,
wobei mindestens ein Bereich mit reduzierter Niveaudifferenz (N_{R}) vorgesehen ist, in welchem ein Höhenunterschied zwischen einer Vertiefung (112) und einer angrenzenden Erhöhung (114) geringer ist als die Normalniveaudifferenz (N_{N}),
wobei der mindestens eine Bereich mit reduzierter Niveaudifferenz (N_{R}) einen Paralleldehnungsbereich (146) des Grundkörpers (104) umfasst, welcher bei einer aus der Umformung des Blechumformprodukts (110) resultierenden Dehnung des Grundkörpers (104) längs Dehnungsvektoren gedehnt ist, die in parallel zueinander verlaufenden Ebenen liegen,
wobei der mindestens eine Bereich mit reduzierter Niveaudifferenz (N_{R}), welcher den Paralleldehnungsbereich (146) des Grundkörpers (104) umfasst, an einen Krümmungsdehnungsbereich (148) des Grundkörpers (104) angrenzt, welcher bei einer aus der Umformung des Blechumformprodukts (110) resultierenden Dehnung des Grundkörpers (104) längs Dehnungsvektoren gedehnt ist, die in sich schneidenden Ebenen liegen,
wobei entweder
a) mindestens ein Bereich mit reduzierter Niveaudifferenz (N_{R}) ausschließlich einen Paralleldehnungsbereich (146) des Grundkörpers (104) umfasst oder
b) mindestens ein Bereich mit reduzierter Niveaudifferenz (N_{R}) sich in einen Krümmungsdehnungsbereich (148) des Grundkörpers (104) hineinerstreckt.

2. Strömungselement (102) nach Anspruch 1, **dadurch gekennzeichnet, dass** mindestens ein Paralleldehnungsbereich (146) ein Bereich des Grundkörpers (104) ist, welcher einen im Wesentlichen linearen Kanalabschnitt (122) eines Kanals (116) umfasst oder durch einen im Wesentlichen linearen Kanalabschnitt (122) eines Kanals (116) gebildet ist.

3. Strömungselement (102) nach einem der Ansprüche 1 oder 2, **dadurch gekennzeichnet, dass** mindestens ein Krümmungsdehnungsbereich (148) ein Bereich des Grundkörpers (104) ist, welcher einen gekrümmten oder gebogenen Kanalabschnitt (124) eines Kanals (116) umfasst oder durch einen gekrümmten oder gebogenen Kanalabschnitt (124) eines Kanals (116) gebildet ist.

4. Strömungselement (102) nach einem der Ansprüche 1 bis 3, **dadurch gekennzeichnet, dass** in mindestens einem Bereich mit Normalniveaudifferenz (N_{N}) ein durch eine Vertiefung (112) gebildeter Kanalgrund (140) einerseits und ein durch die angrenzende Erhöhung (114) gebildeter Steg (120) andererseits im Wesentlichen parallel zueinander verlaufen.

5. Strömungselement (102) nach einem der Ansprüche 1 bis 4, **dadurch gekennzeichnet, dass** in mindestens einem Bereich mit Normalniveaudifferenz (N_{N}) ein durch eine Vertiefung (112) gebildeter Kanalgrund (140) einerseits und ein durch die angrenzende Erhöhung (114) gebildeter Steg (120) andererseits windschief zueinander verlaufen.

6. Strömungselement (102) nach einem der Ansprüche 1 bis 5, **dadurch gekennzeichnet, dass** in mindestens einem Bereich mit reduzierter Niveaudifferenz (N_{R}) ein durch die Vertiefung (112) gebildeter Kanalgrund (140) einerseits und ein durch die angrenzende Erhöhung (114) gebildeter Steg (120) andererseits im Wesentlichen parallel zueinander verlaufen.

7. Bipolarplatte (100) für eine elektrochemische Vorrichtung, umfassend ein oder mehrere Strömungselemente (102) nach einem der Ansprüche 1 bis 6.

8. Bipolarplatte (100) nach Anspruch 7, **dadurch gekennzeichnet, dass** die Bipolarplatte (100) ein erstes Strömungselement (102) und mindestens ein weiteres Strömungselement (102) umfasst, wobei das erste Strömungselement (102) und/oder das mindestens eine weitere Strömungselement (102) Strömungselemente (102) nach einem der Ansprüche 1 bis 6 sind.

9. Bipolarplatte (100) nach Anspruch 8, **dadurch gekennzeichnet, dass** das erste Strömungselement (102) derart an dem weiteren Strömungselement (102) angeordnet ist, dass die Vertiefungen (112) in dem Grundkörper (104) sich in Richtung des weiteren Strömungselements (102) erstrecken.

10. Bipolarplatte (100) nach Anspruch 9, **dadurch gekennzeichnet, dass** die Vertiefungen (112) in dem Grundkörper (104) zumindest abschnittsweise im Bereich eines Kanalgrunds (140) der Vertiefungen (112) an dem weiteren Strömungselement (102) anliegen.

11. Bipolarplatte (100) nach einem der Ansprüche 8 bis 10, **dadurch gekennzeichnet, dass** mindestens ein Bereich mit reduzierter Niveaudifferenz (N_{R}) des Grundkörpers (104) des ersten Strömungselements (102) beabstandet von dem weiteren Strömungselement (102) angeordnet ist.

12. Bipolarplatte (100) nach einem der Ansprüche 8 bis 11, **dadurch gekennzeichnet, dass** zumindest ein Abschnitt eines Paralleldehnungsbereichs (146) des Grundkörpers (104) des ersten Strömungselements (102) beabstandet von dem weiteren Strömungselement (102) angeordnet ist.

13. Bipolarplatte (100) nach einem der Ansprüche 8 bis 12, **dadurch gekennzeichnet, dass** zumindest ein Abschnitt eines Krümmungsdehnungsbereichs (148) des Grundkörpers (104) des ersten Strömungselements (102) beabstandet von dem weiteren Strömungselement (102) angeordnet ist.

14. Verfahren zum Herstellen eines Strömungselements (102), insbesondere eines Strömungselements (102) nach einem der Ansprüche 1 bis 6, wobei das Verfahren Folgendes umfasst:
- Bereitstellen eines Grundkörpers (104);
- Umformen des Grundkörpers (104) zur Ausbildung einer Kanalstruktur (118), wobei die Kanalstruktur (118) mehrere Kanäle (116) umfasst, welche durch Vertiefungen (112) in dem Grundkörper (104) gebildet und durch Erhöhungen (114) des Grundkörpers (104) voneinander getrennt sind,
wobei mindestens ein Bereich mit Normalniveaudifferenz (N_{N}) gebildet wird, welche bezüglich einer senkrecht zu zwei Haupterstreckungsrichtungen (106) des Grundkörpers (104) verlaufenden Höhenrichtung (108) einen Höhenunterschied zwischen einer Vertiefung (112) und einer angrenzenden Erhöhung (114) bezeichnet,
wobei mindestens ein Bereich mit reduzierter Niveaudifferenz (N_{R}) gebildet wird, in welchem ein Höhenunterschied zwischen einer Vertiefung (112) und einer angrenzenden Erhöhung (114) geringer ist als die Normalniveaudifferenz (N_{N}),
wobei der mindestens eine Bereich mit reduzierter Niveaudifferenz (N_{R}) einen Paralleldehnungsbereich (146) des Grundkörpers (104) umfasst, welcher bei der Umformung des Grundkörpers (104) längs Dehnungsvektoren gedehnt wird, die in parallel zueinander verlaufenden Ebenen liegen,
wobei der mindestens eine Bereich mit reduzierter Niveaudifferenz (N_{R}), welcher den Paralleldehnungsbereich (146) des Grundkörpers (104) umfasst, an einen Krümmungsdehnungsbereich (148) des Grundkörpers (104) angrenzt, welcher bei der Umformung des Grundkörpers (104) längs Dehnungsvektoren gedehnt wird, die in sich schneidenden Ebenen liegen,
wobei entweder
a) mindestens ein Bereich mit reduzierter Niveaudifferenz (N_{R}) ausschließlich einen Paralleldehnungsbereich (146) des Grundkörpers (104) umfasst oder
b) mindestens ein Bereich mit reduzierter Niveaudifferenz (N_{R}) sich in einen Krümmungsdehnungsbereich (148) des Grundkörpers (104) hineinerstreckt.

## Claims

1. Flow element (102), comprising a plate-like main body (104) which is formed as a shaped sheet metal product (110) and has a channel structure (118),
wherein the channel structure (118) comprises a plurality of channels (116) which are formed by recesses (112) in the main body (104) and are separated from one another by raised portions (114) of the main body (104),
wherein there is provided at least one region with normal level difference (N_{N}) that denotes, with respect to a height direction (108) running perpendicular to two main directions of extent (106) of the main body (104), a height difference between a recess (112) and an adjoining raised portion (114),
wherein there is provided at least one region with reduced level difference (N_{R}), in which a height difference between a recess (112) and an adjoining raised portion (114) is less than the normal level difference (N_{N}),
wherein the at least one region with reduced level difference (N_{R}) comprises a parallel expansion region (146) of the main body (104) that, in the event of an expansion of the main body (104) resulting from the deformation of the shaped sheet metal product (110), is expanded along expansion vectors which lie in mutually parallel planes,
wherein the at least one region with reduced level difference (N_{R}), that comprises the parallel expansion region (146) of the main body (104), adjoins a curvature expansion region (148) of the main body (104) which, in the event of an expansion of the main body (104) resulting from the deformation of the shaped sheet metal product (110), is expanded along expansion vectors which lie in intersecting planes,
wherein either
a) at least one region with reduced level difference (N_{R}) only comprises a parallel expansion region (146) of the main body (104) or
b) at least one region with reduced level difference (N_{R}) extends into a curvature expansion region (148) of the main body (104).

2. Flow element (102) according to claim 1, **characterised in that** at least one parallel expansion region (146) is a region of the main body (104) which comprises a substantially linear channel segment (122) of a channel (116) or is formed by a substantially linear channel segment (122) of a channel (116).

3. Flow element (102) according to either of claims 1 or 2, **characterised in that** at least one curvature expansion region (148) is a region of the main body (104) which comprises a curved or bent channel segment (124) of a channel (116) or is formed by a curved or bent channel segment (124) of a channel (116).

4. Flow element (102) according to any one of claims 1 to 3, **characterised in that**, in at least one region with normal level difference (N_{N}), on the one hand a channel base (140) formed by a recess (112) and on the other hand a rib (120) formed by the adjoining raised portion (114) run substantially parallel to one another.

5. Flow element (102) according to any one of claims 1 to 4, **characterised in that**, in at least one region with normal level difference (N_{N}), on the one hand a channel base (140) formed by a recess (112) and on the other hand a rib (120) formed by the adjoining raised portion (114) run skewed relative to one another.

6. Flow element (102) according to any one of claims 1 to 5, **characterised in that**, in at least one region with reduced level difference (N_{R}), on the one hand a channel base (140) formed by the recess (112) and on the other hand a rib (120) formed by the adjoining raised portion (114) run substantially parallel to one another.

7. Bipolar plate (100) for an electrochemical device, comprising one or more flow elements (102) according to any one of claims 1 to 6.

8. Bipolar plate (100) according to claim 7, **characterised in that** the bipolar plate (100) comprises a first flow element (102) and at least one further flow element (102), wherein the first flow element (102) and/or the at least one further flow element (102) are flow elements (102) according to any one of claims 1 to 6.

9. Bipolar plate (100) according to claim 8, **characterised in that** the first flow element (102) is arranged on the further flow element (102) in such a way that the recesses (112) in the main body (104) extend in the direction of the further flow element (102).

10. Bipolar plate (100) according to claim 9, **characterised in that** the recesses (112) in the main body (104) lie against the further flow element (102) at least in segments in the region of a channel base (140) of the recesses (112).

11. Bipolar plate (100) according to any one of claims 8 to 10, **characterised in that** at least one region with reduced level difference (N_{R}) of the main body (104) of the first flow element (102) is arranged at a spacing from the further flow element (102).

12. Bipolar plate (100) according to any one of claims 8 to 11, **characterised in that** at least one segment of a parallel expansion region (146) of the main body (104) of the first flow element (102) is arranged at a spacing from the further flow element (102).

13. Bipolar plate (100) according to any one of claims 8 to 12, **characterised in that** at least one segment of a curvature expansion region (148) of the main body (104) of the first flow element (102) is arranged at a spacing from the further flow element (102).

14. Method for producing a flow element (102), in particular a flow element (102) according to any one of claims 1 to 6, wherein the method comprises the following steps:
- providing a main body (104);
- deforming the main body (104) so as to form a channel structure (118), wherein the channel structure (118) comprises a plurality of channels (116) which are formed by recesses (112) in the main body (104) and are separated from one another by raised portions (114) of the main body (104),
wherein at least one region with normal level difference (N_{N}) is formed that denotes, with respect to a height direction (108) running perpendicular to two main directions of extent (106) of the main body (104), a height difference between a recess (112) and an adjoining raised portion (114),
wherein at least one region with reduced level difference (N_{R}) is formed, in which a height difference between a recess (112) and an adjoining raised portion (114) is less than the normal level difference (N_{N}),
wherein the at least one region with reduced level difference (N_{R}) comprises a parallel expansion region (146) of the main body (104) that, in the event of the deformation of the main body (104), is expanded along expansion vectors which lie in mutually parallel planes,
wherein the at least one region with reduced level difference (N_{R}), that comprises the parallel expansion region (146) of the main body (104), adjoins a curvature expansion region (148) of the main body (104) which, in the event of the deformation of the main body (104), is expanded along expansion vectors which lie in intersecting planes,
wherein either
a) at least one region with reduced level difference (N_{R}) only comprises a parallel expansion region (146) of the main body or
b) at least one region with reduced level difference (N_{R}) extends into a curvature expansion region (148) of the main body (104).

## Revendications

1. Elément d'écoulement (102), comprenant un corps de base (104) en forme de plaque qui est constitué en tant que produit de tôle d'estampage (110) et présente une structure de canal (118),
la structure de canal (118) présentant plusieurs canaux (116) qui sont formés par des creux (112) dans le corps de base (104) et qui sont séparés les uns des autres par des crêtes (114) du corps de base (104),
au moins une zone avec différence de niveau normal (N_{N}) étant prévue, laquelle différence, par rapport à une direction en hauteur (108) perpendiculaire à deux directions d'étendue principale (106) du corps de base (104), désigne une différence de hauteur entre un creux (112) et une crête (114) adjacente,
au moins une zone avec différence de niveau réduite (N_{R}) étant prévue, dans laquelle une différence de hauteur entre un creux (112) et une crête (114) adjacente est plus faible que la différence de niveau normal (N_{N}),
la zone au moins au nombre de un avec différence de niveau réduite (N_{R}) comprenant une zone d'étirement parallèle (146) du corps de base (104) qui, lors d'un étirement du corps de base (104) résultant du formage du produit de tôle d'estampage (110), est étirée le long de vecteurs d'étirement qui sont situés dans des plans parallèles entre eux,
la zone au moins au nombre de un avec différence de niveau réduite (N_{R}), qui comprend la zone d'étirement parallèle (146) du corps de base (104), étant adjacente à une zone d'étirement de courbure (148) du corps de base (104) qui, lors d'un étirement du corps de base (104) résultant du formage du produit de tôle d'estampage (110), est étirée le long de vecteurs d'étirement qui sont situés dans des plans qui se coupent,
soit
a) au moins une zone avec différence de niveau réduite (N_{R}) comprenant exclusivement une zone d'étirement parallèle (146) du corps de base (104),
soit
b) au moins une zone avec différence de niveau réduite (N_{R}) s'étendant dans une zone d'étirement de courbure (148) du corps de base (104).

2. Elément d'écoulement (102) selon la revendication 1, **caractérisé en ce qu'**au moins une zone d'étirement parallèle (146) est une zone du corps de base (104) qui comprend un tronçon de canal (122), essentiellement linéaire, d'un canal (116) ou qui est formée par un tronçon de canal (122), essentiellement linéaire, d'un canal (116).

3. Elément d'écoulement (102) selon l'une des revendications 1 ou 2, **caractérisé en ce qu'**au moins une zone d'étirement de courbure (148) est une zone du corps de base (104) qui comprend un tronçon de canal (124), courbé ou arqué, d'un canal (116) ou qui est formée par un tronçon de canal (124), courbé ou arqué, d'un canal (116).

4. Elément d'écoulement (102) selon l'une des revendications 1 à 3, **caractérisé en ce que**, dans au moins une zone avec différence de niveau normal (N_{N}), un fond de canal (140) formé par un creux (112) d'une part et une barrette (120) formée par la crête (114) adjacente d'autre part sont essentiellement parallèles entre eux.

5. Elément d'écoulement (102) selon l'une des revendications 1 à 4, **caractérisé en ce que**, dans au moins une zone avec différence de niveau normal (N_{N}), un fond de canal (140) formé par un creux (112) d'une part et une barrette (120) formée par la crête (114) adjacente d'autre part sont penchés l'un par rapport à l'autre.

6. Elément d'écoulement (102) selon l'une des revendications 1 à 5, **caractérisé en ce que**, dans au moins une zone avec différence de niveau réduite (N_{R}), un fond de canal (140) formé par le creux (112) d'une part et une barrette (120) formée par la crête (114) adjacente d'autre part sont essentiellement parallèles entre eux.

7. Plaque bipolaire (100) pour un dispositif électrochimique, comprenant un ou plusieurs éléments d'écoulement (102) selon l'une des revendications 1 à 6.

8. Plaque bipolaire (100) selon la revendication 7, **caractérisée en ce que** la plaque bipolaire (100) comprend un premier élément d'écoulement (102) et au moins un autre élément d'écoulement (102), le premier élément d'écoulement (102) et/ou l'autre élément d'écoulement (102) au moins au nombre de un étant des éléments d'écoulement (102) selon l'une des revendications 1 à 6.

9. Plaque bipolaire (100) selon la revendication 8, **caractérisée en ce que** le premier élément d'écoulement (102) est disposé sur l'autre élément d'écoulement (102) de telle sorte que les creux (112) dans le corps de base (104) s'étendent en direction de l'autre élément d'écoulement (102).

10. Plaque bipolaire (100) selon la revendication 9, **caractérisée en ce que** les creux (112) dans le corps de base (104) sont contigus avec l'autre élément d'écoulement (102) au moins par tronçons dans la zone d'un fond de canal (140) des creux (112).

11. Plaque bipolaire (100) selon l'une des revendications 8 à 10, **caractérisée en ce qu'**au moins une zone avec différence de niveau réduite (N_{R}) du corps de base (104) du premier élément d'écoulement (102) est disposée à distance de l'autre élément d'écoulement (102).

12. Plaque bipolaire (100) selon l'une des revendications 8 à 11, **caractérisée en ce qu'**au moins un tronçon d'une zone d'étirement parallèle (146) du corps de base (104) du premier élément d'écoulement (102) est disposé à distance de l'autre élément d'écoulement (102).

13. Plaque bipolaire (100) selon l'une des revendications 8 à 12, **caractérisée en ce qu'**au moins un tronçon d'une zone d'étirement de courbure (148) du corps de base (104) du premier élément d'écoulement (102) est disposé à distance de l'autre élément d'écoulement (102).

14. Procédé de fabrication d'un élément d'écoulement (102), en particulier d'un élément d'écoulement (102) selon l'une des revendications 1 à 6, le procédé comprenant ce qui suit :
- fourniture d'un corps de base (104) ;
- formage du corps de base (104) pour la constitution d'une structure de canal (118), la structure de canal (118) comprenant plusieurs canaux (116) qui sont formés par des creux (112) dans le corps de base (104) et qui sont séparés les uns des autres par des crêtes (114) du corps de base (104),
au moins une zone avec différence de niveau normal (N_{N}) étant formée, laquelle différence, par rapport à une direction en hauteur (108) perpendiculaire à deux directions d'étendue principale (106) du corps de base (104), désigne une différence de hauteur entre un creux (112) et une crête (114) adjacente,
au moins une zone avec différence de niveau réduite (N_{R}) étant formée, dans laquelle une différence de hauteur entre un creux (112) et une crête (114) adjacente est plus faible que la différence de niveau normal (N_{N}),
la zone au moins au nombre de un avec différence de niveau réduite (N_{R}) comprenant une zone d'étirement parallèle (146) du corps de base (104) qui, lors du formage du corps de base (104), est étirée le long de vecteurs d'étirement qui sont situés dans des plans parallèles entre eux,
la zone au moins au nombre de un avec différence de niveau réduite (N_{R}) qui comprend la zone d'étirement parallèle (146) du corps de base (104) étant adjacente à une zone d'étirement de courbure (148) du corps de base (104) qui, lors du formage du corps de base (104), est étirée le long de vecteurs d'étirement qui sont situés dans des plans qui se coupent,
soit
a) au moins une zone avec différence de niveau réduite (N_{R}) comprenant exclusivement une zone d'étirement parallèle (146) du corps de base (104),
soit
b) au moins une zone avec différence de niveau réduite (N_{R}) s'étendant dans une zone d'étirement de courbure (148) du corps de base (104).
